Europäisches Patentamt

European Patent Office

Office européen des brevets

(11) Numéro de publication: **0 184 518**
**B1**

## FASCICULE DE BREVET EUROPEEN

(45) Date de publication du fascicule du brevet:
**01.06.88**

(51) Int. Cl.⁴: **F 16 K 11/00,** F 16 L 41/00

(21) Numéro de dépôt: **85402421.3**

(22) Date de dépôt: **05.12.85**

(54) **Dispositif de couplage automatique de tuyaux.**

(30) Priorité: **05.12.84 FR 8418531**

(43) Date de publication de la demande:
**11.06.86 Bulletin 86/24**

(45) Mention de la délivrance du brevet:
**01.06.88 Bulletin 88/22**

(84) Etats contractants désignés:
**AT BE CH DE GB IT LI LU NL SE**

(56) Documents cités:
**DE - B - 1 082 783**
**FR - A - 2 222 587**
**US - A - 3 896 855**

(73) Titulaire: **VOLUMATIC S.A., Zone Industrielle du Saule Michaud, F-37270 Montlouis sur Loire (FR)**

(72) Inventeur: **Carbenay, Pierre Henri Charles, Le Cormier rue des Jeux, F-37270 Montiouis sur Loire (FR)**

(74) Mandataire: **Barnay, André François et al, Cabinet Barnay 80 rue Saint-Lazare, F-75009 Paris (FR)**

ACTORUM AG

## Description

La présente invention est relative à un dispositif pour coupler automatiquement et sélectivement un tuyau avec l'un quelconque de plusieurs autres tuyaux.

Dans de nombreux secteurs industriels, par exemple le génie chimique, la préparation des lubrifiants ou autres, ainsi que dans les chais ou autres entrepôts de liquides, on est amené à affecteur des mélanges de différents liquides provenant de plusieurs réservoirs dans une seule cuve.

Pour réaliser ces mélanges il est nécessaire d'effectuer un certain nombre de branchements successifs du tuyau menant à la cuve finale avec les tuyaux reliés aux différents réservoirs contenant les liquides à mélanger.

Ces branchements, ou couplages de tuyaux ont longtemps été réalisés manuellement, ce qui était long et fastidieux.

On connaît un système plus rationnel et commode dans lequel les extrémités des tuyaux provenant des réservoirs contenant les liquides à mélanger sont alignées parallèlement sur un support et reliées à un collecteur menant à la cuve finale par l'intermédiaire d'un nombre égal de vannes. Il suffit alors d'ouvrir successivement les vannes qui correspondent aux différents réservoirs.

Bien que relativement pratique et rapide ce système présente néanmoins des inconvénients importants. En particulier certaines parties du collecteur ainsi que ses tubulures de raccordement aux différentes vannes constituent des «impasses» ou secteurs isolés plus ou moins importants suivant les positions des vannes fermées, dans lesquels stagne un certain volume de liquide, plus ou moins mélangé, ce qui impose une vidange et un nettoyage de ces parties et représente une perte du volume correspondant le liquide.

On connaît également différents dispositifs rotatifs dans lesquels les extrémités des tuyaux provenant des réservoirs contenant les extrémités des liquides à mélanger sont fixées en cercle autour d'un tuyau coudé monté rotatif et comportant à son extrémité un organe de raccordement télescopique qui est amené en position pour coopérer avec les extrémités desdits tuyaux fixées en cercle, tour à tour, comme décrit notamment dans US-A-3 896 855 et FR-A-2 222 587.

Cependant, les dispositifs décrits dans ces brevets ne prévoient aucun moyen pour prévenir un éculement résiduel en provenance des tuyaux reliés aux différents réservoirs.

L'invention a pour but de remédier à ces inconvénients en réalisant un dispositif de coulage automatique permettant de relier sélectivement et séquentiellement un tuyau avec l'un quelconque de plusieurs autres tuyaux pouvant contenir un liquide sous une pression n'excédant pas 10 bars, adapté pour être commandé à distance et supprimant les vannes multiples, et empêcher tout écoulement résidue.

L'invention a pour objet à cet effet un dispositif de couplage automatique de tuyaux, du type comprenant plusieurs réservoirs fixés radialement sur un cercle, un tuyau coudé rotatif comportant à son extrémité un organe de raccordement coulissant télescopiquement adapté pour coopérer tour à tour avec chacun desdits tuyaux fixés radialement, et des moyens pour entraîner ledit tuyau coudé en rotation, caractérisé en ce que l'extrémité de chacun desdits tuyaux fixés radialement comporte un clapet sollicité élastiquement en position de fermeture, et en ce que ledit tuyau coudé en forme de T comporte un moyen d'actionnement adapté pour solliciter ledit organe de raccordement en position d'extension et déplacer ledit clapet en position d'ouverture.

La description qui va suivre, en regard des dessins annexés à titre d'exemples non limitatifs, permettra de bien comprendre comment la présente invention peut être mise en pratique.

La figure 1 est une vue en élévation latérale et en section d'un mode de réalisation du dispositif suivant l'invention montrant le raccord télescopique en position active.

La figure 2 en est une vue partielle en section montrant le raccord télescopique en position rétractée, inactive.

La figure 3 est une vue en plan selon la ligne III-III du dispositif représenté à la figure 1.

En se référant au dessin, le dispositif suivant l'invention comprend essentiellement une cuuvette circulaire 2 présentant un trou central 3 délimité par une collerette renforcée 4, et un rebord périphérique radial 5.

Sur le rebord périphérique 5 sont fixés par exemple huit embouts de raccords 7a à 7h par leur embase individuelle 6, et orientés radialement dans un même plan et dont les extrémités en saillie à l'intérieur de la périphérie de la cuvette sont situés sur un même cercle concentrique à celle-ci.

Un moyeu tubulaire 8 est fixé dans le trou 3, sur la collerette 4 au moyen d'une bride 9 et de vis 10, de façon à s'étendre axialement dans la cuvette 2.

Le moyeu 8 porte dans ses extrémités des roulements 11 dans lesquels un arbre 12 est monté rotatif coaxialement avec ses extrémités s'étendant à l'extérieur du moyeu 8.

Sur son extrémité faisant saillie à l'extérieur de la cuvette 2, l'arbre 12 porte une poulie 13 reliée par l'intermédiaire d'une courroie 14 à une seconde poulie 15 calée sur l'arbre d'un moteur 16 dans un but qui apparaîtra dans la suite.

A son extrémité opposée, située à l'intérieur de la cuvette, l'arbre 12 porte un T tubulaire inversé 17 fixé sur cet arbre par la partie médiane de sa barre horizontale 18 de manière que sa barre verticale 19 s'étende vers le haut.

Dans le passage horizontal ainsi délimité par la barre 18 s'étend la tige 20 du piston d'un vérin 21 fixé, par exemple vissé, dans l'une des extrémités de la barre 18.

A son extrémité opposée la barre 18 du T 17 comporte une bride 22 au moyen de laquelle un ensemble 23 de coupleur télescopique est fixé dans le prolongement de la barre 18.

L'ensemble 23 de coupleur télescopique comprend un tube fixe 24 ayant une bride 25 fixée sur la bride 22, et un tube mobile ou manchon 26 monté coulissant sur le tube fixe 24, sur des portées 27 de celui-ci, une garniture d'étanchéité 28 étant de préférence prévue entre les deux.

Dans son extrémité opposée au T 17, le manchon mobile 26 comporte un croisillon 29 formant un palier lisse 30 dans lequel coulisse un prolongement 31 de la tige de piston 20.

Le prolongement 31 de la tige de piston comporte une butée fixe 32, un ressort hélicoïdal 33 disposé autour du prolongement 31 entre la butée 32 et le croisillon 29, et une tête 34.

L'extrémité du manchon mobile 26 présente intérieurement une forme complémentaire de celle des embouts de raccordement 7a à 7h, avec une butée interne 35 et des moyens d'étanchéité 36, l'agencement étant tel que le manchon 26, poussé par le vérin 21 puisse venir s'ajuster de façon étanche sur l'un ou l'autre des embouts 7a à 7h, suivant l'orientation donnée à l'ensemble par le moteur 16 autour de l'arbre 12.

Chaque embout de raccordement 7a à 7h comporte intérieurement une soupape 37 à fermeture automatique de type connu comprenant un obturateur-champignon sollicité en position de fermeture par un ressort 38 disposé autour de sa tige 39.

Le dispositif suivant l'invention comprend enfin un tuyau de départ 40 (ou d'arrivée suivant le sens de travail) coudé et relié à la barre verticale 19 du T 17 par un joint d'étanchéité rotatif 41.

D'une façon avantageuse, et suivant l'exemple représenté, il est également prévu un tuyau 42 de vidange débouchant dans la cuvette, un indicateur de niveau 43 et enfin un système indicateur de position 44.

Suivant l'exemple représenté, le système 44 comprend un boîtier 45 porté par un bras radial 46 fixé sur les brides 22, 25 et coaxial à l'ensemble télescopique 23.

Dans le boîtier 23 sont montés plusieurs capteurs 47 alignés radialement avec l'axe de l'ensemble 23 et de façon à coïncider avec des blocs amovibles 48 également alignés radialement, maix fixés en nombre différent sur chaque embout de raccordement 7a à 7h. Un dispositif électronique connu relié aux capteurs permet de déterminer le nombre des blocs 48, et ainsi de reconnaître les embouts 7a à 7h.

Le fonctionnement du dispositif de couplage rotatif suivant l'invention est le suivant.

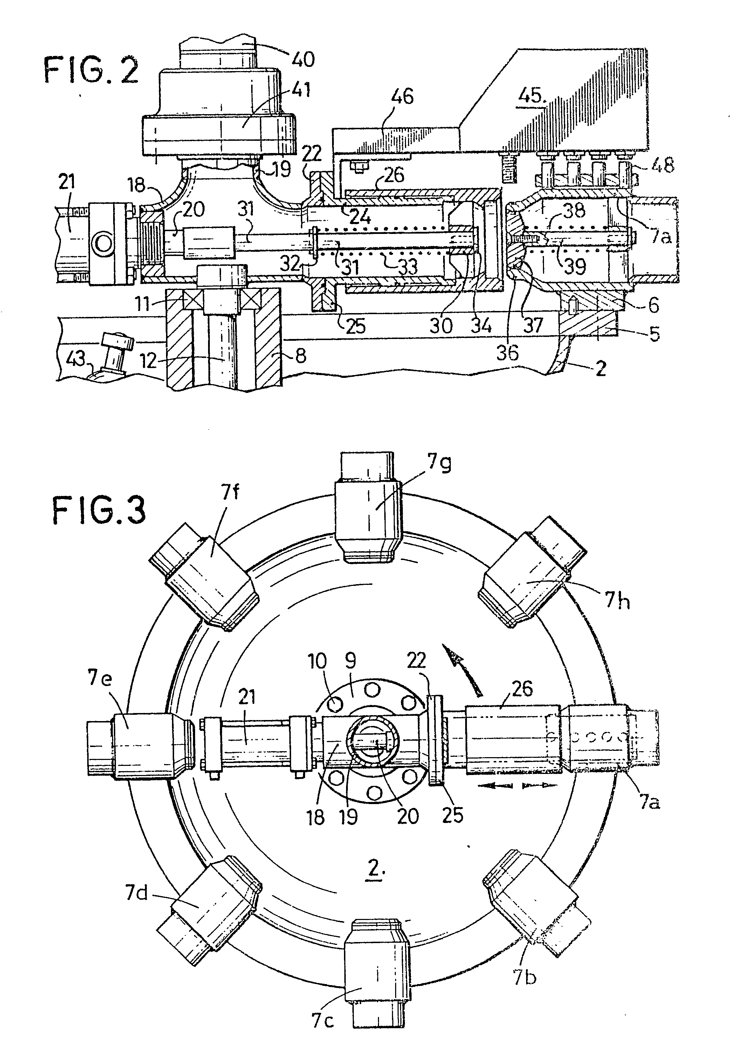

On supposera que le dispositif se trouve dans la position représentée à la figure 2, dans laquelle l'ensemble de coupler est en position rétractée.

En service les embouts de raccordement 7a à 7h sont reliés chacun à un réservoir (non représenté) contenant les liquides à mélanger qui exercent des pressions sur les soupapes 37, ces pressions étant proportionnelles aux différentes hauteurs de liquide dans ces réservoirs,et le tuyau central 40 est relié à un réservoir de mélange par l'intermédiaire d'une pompe aspirante/foulante (non représentée).

Lorsqu'on désire coupler le tuyau central 40 avec l'un quelconque des embouts de raccordement 7a à 7h (ou inversement) on commande le moteur électrique 16 de façon à amener l'extrémité du manchon mobile 26 de l'ensemble de coupleur télescopique en alignement avec l'embout de raccordement désiré.

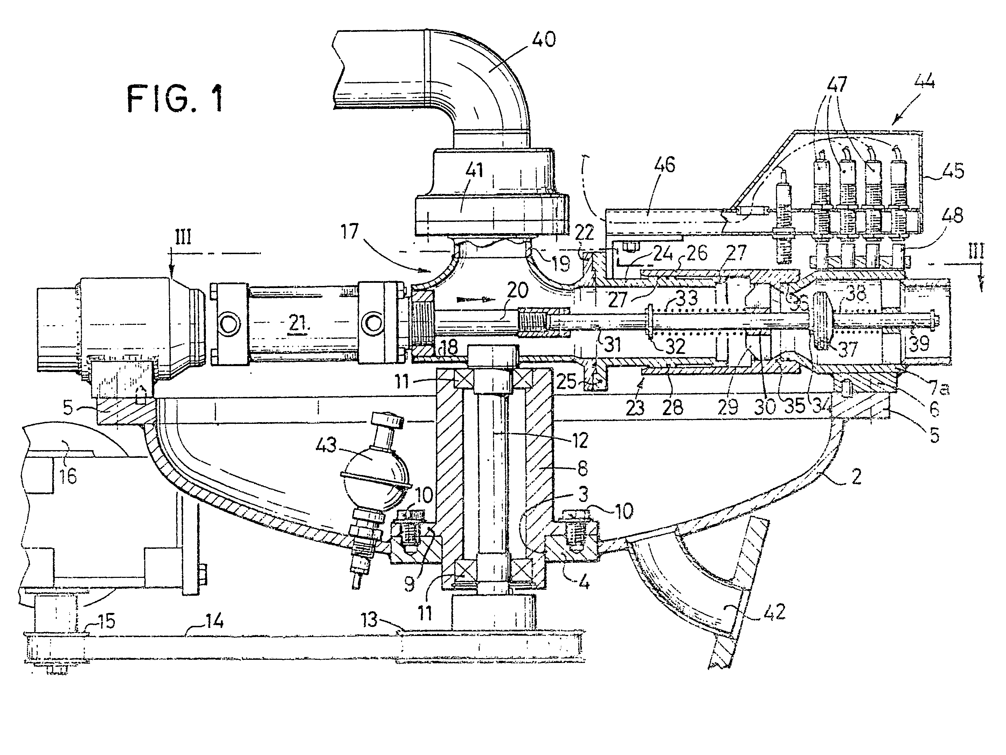

On actionne alors le vérin 21 de façon à étendre sa tige de piston 20. Dans un premier temps la butée 32, comprenant le ressort 33 pousse ce dernier contre le croisillon 29 et entraîne par suite le manchon mobile 26 qui, sous l'impulsion du ressort 33, vient s'engager de façon étanche sur l'extrémité de l'embout de raccordement 7a à 7h choisi (figure 1).

Dans un second temps, la tige du piston et son prolongement 31, continuant à avancer, la tête 34 de ce dernier entre en contact avec l'obturateur 37 de l'embout correspondant, ouvrant ainsi la soupape et mettant en communication l'embout avec le tuyau central.

Lorsque la quantité désirée de liquide a été transfe-rée (dans un sens ou dans l'autre), on actionne le vérin 21 dans l'autre sens et le fonctionnement inverse se produit.

Le surplus de liquide pouvant rester dans l'ensemble télescopique s'écoule et est recueilli dans la cuvette 2. Si le niveau de liquide dans celle-ci s'élève au-dessus d'un seuil prédéterminé, l'indicateur de niveau 43 actionne un dispositif avertisseur quelconque approprié, visuel ou sonore, de type connu indiquant la nécessité de vidanger la cuvette au moyen du tuyau 42.

On comprend que le dispositif peut être entièrement automatisé par des moyens électroniques connus, d'un type pouvant être programmé si on le désire, reliés aux capteurs 47 et au moteur 16 pour amener l'ensemble télescopique sélectivement en face des embouts de raccordement suivant une séquence prédéterminée et pour commander également le fonctionnement de la pompe ainsi que les moyens de vidange.

Dans une variante plus simple, non représentée car moins avantageuse, les extrémités des embouts 7a à 7h pourraient être simplement des orifices formés dans une surface cylindrique, et l'extrémité de l'ensemble constitué par un bloc ayant une surface courbure de même rayon adaptée pour glisser en contact d'étanchéité avec ladite surface cylindrique et percé d'un passage communiquant avec le tuyau 40, la tige du piston du vérin 21 servant alors seulement à l'ouverture des clapets.

Cependant cette solution ne permettrait pas d'obtenir une étanchéité satisfaisante dans certaines conditions de pression.

## Revendications

1. Dispositif de couplage automatique de tuyaux, du type comprenant plusieurs tuyaux (7a-7h) fixés radialement sur un cercle, un tuyau coudé (17) rotatif comportant à son extrémité un organe de raccordement (26) coulissant télescopiquement adapté pour coopérer tour à tour avec chacun desdits tuyaux (7a à 7h) fixés radialement, et des moyens (16) pour entraîner ledit tuyau coudé (17) en rotation, caractérisé en ce que l'extrémité de chacun desdits tuyaux (7a-7h) fixés radialement comporte un clapet (37) sollicité élastiquement en position de fermeture, et en ce que ledit tuyau coudé (17) en forme de T comporte un moyen d'actionnement (21) adapté pour solliciter ledit organe de raccordement (26) en position d'extension et déplacer ledit clapet (37) en position d'ouverture.

2. Dispositif suivant la revendication 1, caractérisé en ce que ledit tuyau coudé présente la forme d'un T inversé (17).

3. Dispositif suivant la revendication 2, caractérisé en ce que ledit organe de raccordement est un manchon (26) monté coulissant axialement à une extrémité de la barre horizontale (18) du T inversé (17).

4. Dispositif suivant la revendication 3, caractérisé en ce que ledit moyen d'actionnement est un vérin (21) monté à l'extrémité opposée de la barre horizontale (18) du T (17) et comportant une tige (31) coulissant axialement dans ladite barre et dans un palier (30) solidaire dudit manchon (26).

5. Dispositif suivant la revendication 4, caractérisé en ce que ladite tige (31) comporte une butée fixe (32) et un ressort hélicoïdal (33) qui l'entoure, entre ladite butée et le palier (30) solidaire du manchon (26).

## Patentansprüche

1. Vorrichtung zum automatischen Kuppeln von Rohren für mehrere radial im Kreis befestigte Rohre (7a-7h), mit einem schwenkbaren Krümmer (17), der an seinem Ende ein teleskopartig verschiebbares Verbindungsorgan (26) aufweist, das der Reihe nach mit jedem der radial befestigten Rohre (7a-7h) zusammenwirken kann, und mit einer den Krümmer (17) verschwenkenden Einrichtung (16), dadurch gekennzeichnet, dass das Ende jedes der radial befestigten Rohre (7a-7h) ein Klappenventil (37) besitzt, das federnd in Schliessstellung haltbar ist, und dass der T-förmige Krümmer (17) eine Betätigungseinrichtung (21) aufweist, welche das Verbindungsorgan (26) in eine vorgeschobene Stellung und das Klappenventil (37) in eine Öffnungsstellung zu bringen vermag.

2. Vorrichtung nach Anspruch 1, dadurch gekennzeichnet, dass der Krümmer die Form eines kopfstehenden T (17) hat.

3. Vorrichtung nach Anspruch 2, dadurch gekennzeichnet, dass das Verbindungsorgan als an einem Ende des waagerechten Querstücks (18) des kopfstehenden T (17) axial verschiebbare Muffe (26) ausgebildet ist.

4. Vorrichtung nach Anspruch 3, dadurch gekennzeichnet, dass die Betätigungseinrichtung als Hydraulikzylinder (21) ausgebildet ist, der an dem anderen Ende des waagerechten Querstücks (18) des T (17) angeordnet ist und eine Stange (31) aufweist, die in dem Querstück und in einem fest mit der Muffe (26) verbundenen Lager (30) axial verschiebbar ist.

5. Vorrichtung nach Anspruch 4, dadurch gekennzeichnet, dass die Stange (31) einen feststehenden Anschlag (32) und eine um die Stange gelegte Schraubenfeder (33) zwischen dem Anschlag und dem mit der Muffe (25) fest verbundenen Lager (30) aufweist.

## Claims

1. Device for the automatic coupling of pipes, of the type comprising a plurality of pipes (7a-7h) radially fixed on a circle, a rotary angled pipe (17) having a telescopically sliding connecting member (26) at its end, arranged to cooperate in turn with each of said radially fixed pipes (7a-7h), and means (16) for setting said angled pipe (17) into rotation, characterised in that the end of each of said radially fixed pipes (7a-7h) comprises a valve (37) resiliently biased towards a closed position, and in that said angled pipe (17) in the form of a T comprises an actuating means (21) arranged to bias said connecting member (26) into an extended position and to displace said valve (37) into an open position.

2. Device according to claim 1, characterised in that said angled pipe has the form of an inverted T (17).

3. Device according to claim 2, characterised in that said connecting member is a sleeve (26) mounted to be slidable axially at one end of the horizontal limb (18) of the inverted T (17).

4. Device according to claim 3, characterised in that said actuating means is a jack (21) mounted at the opposite end of the horizontal limb (18) of the T (17) and comprises a rod (31) which is slidable axially in said limb and in a bearing (30) fixed to said sleeve (26).

5. Device according to claim 4, characterised in that said rod (31) comprises a fixed stop (32) and a helical spring (33) which encircles the rod and which extends between said stop and the bearing (30) which is fixed to the sleeve (26).

FIG. 1

FIG.2

FIG.3